**Europäisches Patentamt**

**European Patent Office**

**Office européen des brevets**

(19)

(11) Veröffentlichungsnummer: **0 102 050 B1**

# (12) EUROPÄISCHE PATENTSCHRIFT

(45) Veröffentlichungstag der Patentschrift:
**07.12.88**

(21) Anmeldenummer: **83108282.1**

(22) Anmeldetag: **23.08.83**

(51) Int. Cl.⁴: **B 60 S 1/34**

(54) Scheibenwischvorrichtung für Kraftfahrzeuge.

(30) Priorität: **26.08.82 DE 3231849**

(43) Veröffentlichungstag der Anmeldung:
**07.03.84 Patentblatt 84/10**

(45) Bekanntmachung des Hinweises auf die Patenterteilung:
**07.12.88 Patentblatt 88/49**

(84) Benannte Vertragsstaaten:
**DE FR GB IT SE**

(56) Entgegenhaltungen:
**DE-B- 2 314 724**

**PATENT ABSTRACTS OF JAPAN, Band 5, Nr. 158
(M-91)[830], 12. Oktober 1981; & JP - A - 56 86840
(NISSAN JIDOSHA K.K.) 15.07.1981**

(73) Patentinhaber: **BAYERISCHE MOTOREN WERKE
Aktiengesellschaft, Postfach 40 02 40 Petuelring 130 -
AJ-36, D-8000 München 40 (DE)**

(72) Erfinder: **Hartmann, Norbert, Wotanstrasse 8,
D-8034 Germering (DE)**

(74) Vertreter: **Bullwein, Fritz, Bayerische Motoren Werke
Aktiengesellschaft
Postfach 40 02 40 Petuelring 130 AJ-33,
D-8000 München 40 (DE)**

ACTORUM AG

EP 0 102 050 B1

**Beschreibung**

Die Erfindung bezieht sich auf eine Scheibenwischvorrichtung für Kraftfahrzeuge, mit einem Wischarm, der ein Wischblatt trägt und in einem Schwenklager an einem auf einer Wischerwelle sitzenden Befestigungsteil gehalten ist, und mit einer Feder, die am Wischarm angreift und am Befestigungsteil gehalten ist.

Bei derartigen Scheibenwischvorrichtungen, wie sie allgemein üblich sind, dient die Feder in der Regel dazu, ein insbesondere bei hoher Srömungsgeschwindigkeit der auftreffenden Luft mögliches Abheben des Wischblatts von der zu reinigenden Oberfläche infolge des Auftriebs zu verhindern. Hierzu drückt die Feder die Wischstange und damit das Wischblatt in Richtung dieser Oberfläche. Bei niedrigen Strömungsgeschwindigkeiten ist die durch die Feder hervorgerufene Anpresskraft des Wischblatts wesentlich grösser, was zu erheblichen Funktionsbeeinträchtigungen der Wischvorrichtung, beispielsweise infolge des sogenannten «Rubbelns» des Wischblatts, führen kann.

Zwar gibt es bereits die Idee, durch Änderung der Federrate die Anpresskraft des Wischblatts entsprechend dem wirksamen Auftrieb zu variieren und damit zumindest näherungsweise eine konstante Anpresskraft zu erreichen. Hierzu ist es aus der DE-A-2 824 014 bekannt, einen Haltezapfen für die Feder verstellbar am Befestigungsteil anzulenken. Vorschläge, wie sie beispielsweise in der DE-B-1 555 256 und der GB-A-571 526 enthalten sind, gehen in die gleiche Richtung. Allen diesen Vorschlägen ist jedoch gemeinsam, dass sie konstruktiv aufwendig sind und eine relativ grobe Anpassung der Anpresskraft an den auftretenden Auftrieb ermöglichen.

Der Erfindung liegt die Aufgabe zugrunde, eine Scheibenwischvorrichtung der eingangs genannten Art zu schaffen, die auf konstruktiv einfache Weise ein durch den auftretenden Auftrieb bedingtes Abheben des Wischblattes von der zu reinigenden Oberfläche verhindert.

Die Erfindung löst diese Aufgabe durch die kennzeichnenden Merkmale des Patentanspruchs 1.

Der Grundgedanke der Erfindung besteht darin, durch Einführen des Gegenlagers den Wischarm und damit die Befestigungsstelle des Wischblattes an diesen Wischarm in einem konstanten Abstand von der zu reinigenden Oberfläche zu halten. Die Wirkung des Auftriebes wird dadurch eliminiert. Das Wischblatt enthält eine federnde Wischlippe. Diese unterliegt nunmehr lediglich ihrer eigenen Federkraft und erfährt damit eine anströmungsunabhängige Anpresskraft. Die an der Wischstange angreifende Feder hingegen übt nur insoweit eine Wirkung auf die Wischlippe aus, als sie deren Verspannung erzeugt.

Die Realisierung der Erfindung ist auf verschiedene Weise möglich. So kann das Gegenlager so ausgebildet sein, dass es selbst eine Vergrösserung des Abstands der Wischstange von der Oberfläche verhindert. Dabei könnten sich jedoch Schwierigkeiten nämlich auf das in der Regel erforderliche Abheben der Wischstange beispielsweise für einen Service des Wischblattes ergeben. In dieser Hinsicht vorteilhafter ist hingegen eine Ausführung der Erfindung, bei der das Gegenlager dem Absenken des Wischblattes entgegenwirkt und die Federkraft grösser als die maximal auftretende Auftriebskraft ist. In diesem Fall übernimmt die Feder die Kompensation des Auftriebes und hält die Wischstange in Anlage am Gegenlager. Andererseits verhindert das Gegenlager ein Verringern des Abstandes des Wischarms von der Oberfläche und damit auch hier eine Federwirkung auf das Wischblatt. Dabei ist jedoch ein willkürliches Abheben des Wischblattes von der Oberfläche durch Verschwenken des Wischarms bei Überwinden der Federkraft in gewohnter Weise möglich.

Das Gegenlager kann unterschiedlich angeordnet werden. So kann es beispielsweise zwischen Schwenklager und Befestigungsstelle des Wischblattes am Wischarm liegen. Demgegenüber ergibt sich eine räumlich gedrängte Bauform, wenn das Gegenlager in der Nähe der Wischwelle liegt. Diese Ausführung zeichnet sich zu dem durch eine grosse mechanische Stabilität aus.

Schliesslich besteht eine Weiterbildung der Erfindung darin, dass das Gegenlager als Kurvenring ausgebildet ist, deren Aufbau der zu reinigenden Oberfläche angepasst ist. Damit lässt sich insbesondere bei stark gekrümmten Oberflächen der Wischarm über seinen ganzen Schwenkbereich im gleichen Abstand von der Oberfläche einstellen und damit, wie an sich aus der DE-B-2 314 724 bekannt, über den gesamten Bereich der Anpresskraft des Wischblattes konstant halten. Mit Hilfe des Kurvenrings lässt sich aber auch die Anpresskraft über den Bereich in definierter Weise variieren. So kann, wie an sich aus der DE-A-1 680 194 bekannt, das Wischblatt in seiner Ruhelage entlastet werden. Ferner kann die Anpresskraft für die Teile des Bereichs, die einer höheren Verschmutzung ausgesetzt sind, erhöht bzw. für die Bereiche, die beispielsweise auch durch ein paralleles Wischblatt bestrichen werden, verringert werden.

In der Zeichnung ist ein Ausführungsbeispiel der Erfindung dargestellt. Es zeigt

Fig. 1 eine Scheibenwischvorrichtung entsprechend der Erfindung,

Fig. 2 einen Ausschnitt aus Fig. 1 und

Fig. 3 schematisch das Prinzip der Erfindung.

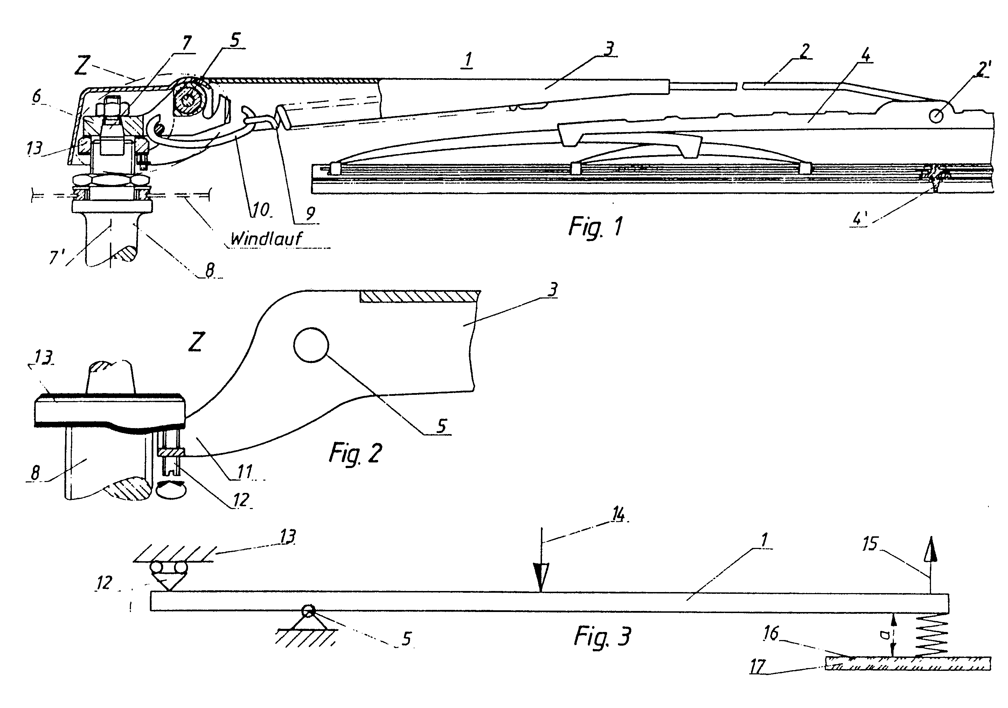

Die in Fig. 1 gezeigte Scheibenwischvorrichtung enthält einen Wischarm 1, der aus einer Wischstange 2 (verkürzt dargestellt) und einem Gelenkteil 3 besteht. Am Ende der Wischstange 2 ist ein Wischblatt 4 gehalten.

Das Gelenkteil 3 ist in einem Schwenklager 5 gehalten, das in einem Befestigungsteil 6 sitzt. Das Befestigungsteil 6 sitzt drehfest auf einer Wischwelle 7, die in einem Wischwellenlager 8 in der nicht dargestellten Karosserie des Kraftfahrzeuges drehbeweglich ist. Am Wischarm 1 greift eine Feder 9 an, die am Gelenkteil 3 und über einen Bügel 10 am Befestigungsteil 6 gehalten ist.

Schliesslich sitzt das Endteil 11 des Gelenkteils 3 über eine Justierschraube 12 auf einem Kurvenring 13 auf, der ein Gegenlager für den Wischarm 1 bildet. Der Kurvenring 13 ist ortsfest ebenfalls an der Karosserie des Kraftfahrzeuges gehalten. Sein Aufbau und sein Zusammenwirken mit dem Wischarm 1 ist insbesondere in Fig. 2 zu erkennen, in der ein mit Z bezeichneter Ausschnitt aus Fig. 1 dargestellt ist.

Die Wirkungsweise der in den Fig. 1 und 2 dargestellten Vorrichtung ist anhand von Fig. 3 erläutert. In dieser Fig. 3 ist schematisch der Wischarm 1 mit seiner Lagerung im Schwenklager 5 und dem durch den Kurvenring 13 gebildeten Gegenlager dargestellt. Die Kraftwirkung der Feder 9 auf den Wischarm 1 ist durch einen Pfeil 14 gezeigt, der Angriffspunkt dieser Kraft am Wischarm 1 entspricht der Lage des Punktes, an dem die Feder 9 am Gelenkteil 3 angreift. Die auf den Wischarm 1 und das Wischblatt 4 wirkende maximale Auftriebskraft (bei maximal möglicher Luftanströmung) ist durch einen weiteren Pfeil 15 dargestellt.

Die Dimensionierung der Feder 9 ist nun so vorgenommen, dass das an der Befestigungsstelle des Wischblatts 4 am Wischarm 1 durch den Auftrieb (Pfeil 15) verursachte Moment stets kleiner als das an dieser Stelle durch die Feder 9 hervorgerufene Moment ist. Damit ist sichergestellt, dass unter allen Betriebsbedingungen des Kraftfahrzeuges die Auftriebskraft kompensiert wird. Gleichzeitig sorgt die Feder 9 aufgrund der durch sie bewirkten Momentendifferenz dafür, dass der Wischarm 1 mit seiner Verstellschraube 12 stets auf dem Kurvenring 13 aufliegt. Bei vorausgesetzt in sich starrem Aufbau des Wischarms 1 ergibt sich daraus, dass der Befestigungspunkt des Wischblatts 4 am Wischarm 1 für eine beliebige Einstellung des Wischarms 1 innerhalb seines Schwenkbereichs um die Achse 7′ der Wischerwelle 7 seinen Abstand a von der Oberfläche 16 der ausschnittsweise dargestellten Scheibe 17 unabhängig vom tatsächlich herrschenden Auftrieb konstant hält. Daraus resultiert die Konstanz des Aufpressdrucks der Wischlippe 4′ des Wischblattes 4 auf der Oberfläche 16. Daraus ergibt sich aber dass der Anpressdruck tatsächlich unabhängig vom Auftrieb konstant ist.

Durch den Kurvenring 13 wird die Einstellung des Wischarms 1 über seinen Schwenkbereich dem Verlauf der Scheiben-Oberfläche 16 angepasst. Diese Anpassung erfolgt so, dass die Befestigungsstelle des Wischblatts 4 am Wischarm 1 über den gesamten Schwenkbereich mit Ausnahme der Endlage den konstanten Wert a besitzt. In der Endlage selbst wird dieser Abstand geringfügig erhöht und damit das Wischblatt 4 entlastet.

Wie anhand von Fig. 3, aber auch anhand der beiden vorangegangenen Fig. zu erkennen, kann der Wischarm 1 durch Schwenken um das Schwenklager 5 entgegen der Wirkung der Feder 9 von der Scheibe 17 abgehoben werden. Dabei gelangt das Ende des Wischarms 1 ausser Eingriff mit dem Gegenlager 13.

Alternativen zu der dargestellten Ausführungsform sind, wie bereits eingangs erwähnt, beispielsweise die Anordnung des Gegenlagers zwischen Schwenklager 5 und der Befestigungsstelle des Wischblatts 4 am Wischarm 1. Allerdings ist dann der Angriff dieses Gegenlagers auf der anderen Seite wie der des dargestellten, durch den Kurvenring 13 gebildeten Gegenlagers.

**Patentansprüche**

1. Scheibenwischvorrichtung für Kraftfahrzeuge, mit einem Wischarm (1), der ein Wischblatt (4) trägt und in einem Schwenklager (5) an einem auf einer Wischerwelle (7) sitzenden Befestigungsteil (6) gehalten ist, und mit einer Feder (9), die am Wischarm angreift und am Befestigungsteil gehalten ist, dadurch gekennzeichnet, dass der Wischarm (1) in einem Gegenlager (13) am Befestigungsteil abgestützt und durch eine Feder (9) in Anlage an dieses Gegenlager gegen die Auftriebskraft der Scheibe gehalten ist und dass das Gegenlager ortsfest an der Karosserie des Fahrzeuges gehalten ist und auf dem gesamten Schwenkbereich des Wischarmes (1) liegt.

2. Vorrichtung nach Anspruch 1, dadurch gekennzeichnet, dass das Gegenlager (13) einem Absenken des Wischarms (1) entgegenwirkt und die Kraft der Feder (9) grösser als die maximal auftretende Auftriebskraft ist.

3. Vorrichtung nach Anspruch 1 oder 2, dadurch gekennzeichnet, dass das Gegenlager (13) in der Nähe der Wischwelle (7) liegt.

4. Vorrichtung nach einem der Ansprüche 1 bis 3, dadurch gekennzeichnet, dass das Gegenlager als Kurvenring (13) ausgebildet ist, deren Aufbau der zu reinigenden Oberfläche (16) angepasst ist.

**Claims**

1. A window-wiping device for motor vehicles, comprising a wiper arm (1) bearing a wiper blade (4) and held in a swivel bearing (5) on a securing part (6) disposed on a wiper shaft (7) and also comprising a spring (9) which engages the wiper arm and is held on the securing part, characterised in that the wiper arm (1) is mounted in an abutment (13) on the securing part and is held by a spring (9) against the abutment in opposition to the lifting force of the window, and the abutment is held stationary on the vehicle body and lies on the common pivoting region of the wiper arm (1).

2. A device according to claim 1, characterised in that the abutment (13) counteracts a lowering of the wiper arm (1) and the force of the spring (9) is greater than the maximum lifting force which occurs.

3. A device according to claim 1 or 2, characterised in that the abutment (13) lies near the wiper shaft (7).

4. A device according to any of claims 1 to 3, characterised in that the abutment is constructed as a cam ring (13), the construction of which is adapted to the surface (16) to be cleaned.

## Revendications

1. Dispositif d'essuie-glace pour véhicules automobiles comportant un bras (5) portant un balai (4) et maintenu par un palier de basculement (5) sur une pièce de fixation (6) portée par l'axe (7) du dispositif et appliquée par un ressort (9) relié au bras et à une partie de fixation, dispositif caractérisé en ce que le bras (1) s'appuie sur un contre-appui (13) au niveau de la partie de fixation et est maintenu par un ressort (9) contre de contre-appui, contre la poussée du pare-brise et en ce que le contre-appui est fixe sur la carrosserie du véhicule et correspond à l'ensemble de la plage de balayage du bras (1).

2. Dispositif selon la revendication 1, caractérisé en ce que le contr-appui (13) agit contre l'affaissement du bras (1) et la force du ressort (9) est supérieure à la force de poussée maximale possible.

3. Dispositif selon la revendication 1 ou 2, caractérisé en ce que le contre-appui (13) est situé au voisinage de l'arbre (7) du dispositif.

4. Dispositif selon l'une des revendications 1 à 3, caractérisé en ce que le contre-appui (13) est en forme de bague constituant une came qui est adaptée à la structure de la surface (16) à nettoyer.

EP 0 102 050 B1

Z

7  5

6

13

7'   8

10   9

Windlauf

*Fig. 1*

1   3   2   4   2'

4'

Z

13

8   11   12

5

3

*Fig. 2*

13

12   5

14   1   15

16

17

*Fig. 3*